# EUROPÄISCHE PATENTANMELDUNG

(11) **EP 0 919 319 A1**
(43) Veröffentlichungstag der Anmeldung: **02.06.1999**
(21) Anmeldenummer: 98121345.7
(22) Anmeldetag: 10.11.1998
(51) Int. Cl.: B23K 26/08, B23K 37/047

(54) **Einrichtung zum Einschieben und Positionieren von mindestens zwei Blechplatinen in eine Laserstrahlschweissmaschine**

(30) Priorität: 25.11.1997 DE 19752095
(71) Anmelder: Krupp Drauz Ingenieurbetrieb GmbH, 09337 Hohenstein-Ernstthal (DE)
(72) Erfinder: Rohland, Jörg, 09119 Chemnitz (DE); Stein, Hans, 09358 Wüstenbrand (DE); Bünning, Klaus, 09113 Chemnitz (DE)
(74) Vertreter: Illing, Ralf, Dipl.-Jur. Ing.

(57) **Zusammenfassung**

Mit der Einrichtung werden mindestens zwei Blechplatinen gleicher oder unterschiedlicher Stärken, Formen, Größen und Werkstoffen in eine Laserstrahlschweißmaschine eingeschoben und positioniert. Die Einrichtung besteht aus beidseitig des Schweißspaltes angeordneten Spanneinrichtungen, einem Schweißtisch gegen dessen Tischfläche die Blechplatinen gespannt werden, Mittenanschlägen, sowie einer Laserstrahlschweißanlage, deren Schweißoptik parallel zum Schweißspalt verfahrbar ist.
Durch die Einrichtung sollen die Blechplatinen schnell und genau rechtwinklig zum Schweißspalt eingeschoben werden und dabei in Richtung dieser Bewegung und längs zum Schweißspalt genau positioniert werden.
Ein gemeinsamer Einschiebebalken, versehen mit zwei Kurzhubzylindern für jede Blechplatine, ermöglichen schnelle und genaue Einschiebbewegungen.
Die Lagegenauigkeit in Längsrichtung des Schweißspaltes wird durch die auf und mit einem Schienenpaar verfahrbaren Positionierrollen, die absenkbar sind, erzielt.

## Beschreibung

Die Erfindung betrifft eine Einrichtung zum Einschieben und Positionieren von mindestens zwei Blechplatinen gleicher oder unterschiedlicher Stärken, Formen, Größen oder Werkstoffen zueinander in einer Laserstrahlschweißmaschine mit beidseitig des Schweißspaltes angeordneten Spanneinrichtungen, einem Schweißtisch, gegen dessen Tischfläche die Blechplatinen gespannt werden und einer Schweißoptik, die parallel zum Schweißspalt verfahrbar ist.

Aus EP 0807 487 A1 ist bekannt, daß Transportroboter die zu schweißenden Blechplatinen auf den Schweißtisch beidseitig des Schweißspaltes zwischen kegelförmige Zentrierkörper ablegen. Diese Zentrierkörper sind am Schweißtisch verstellbar befestigt und müssen jeweils beim Werkstückwechsel manuell neu eingestellt werden. Zwischen den Zentrierkörpern befindet sich je eine Schubkolbeneinheit, deren Kolbenstange zur Schweißfuge gerichtet ist. Die Ausgangsstellung der Kolbenstangen ist so gewählt, daß vor ihnen die zu schweißenden Blechplatinen abgelegt werden können und dann durch den Hub der Kolbenstangen mit ihren zu verschweißenden Kanten auf die Schweißfuge positioniert werden.
Weiterhin ist bekannt, zu schweißende Blechplatinen mit Transportzangen zu fassen. Die Transportzangen sind auf rechtwinklig zum Schweißspalt angeordneten Führungen gelagert und werden durch unterschiedliche Antriebe vor und zurück bewegt sowie geöffnet und geschlossen (US 5,266,770). Alle diese Lösungen setzen voraus, daß die Platinen beim Auflegen auf den Schweißtisch oder bei der Einführung in die Transportzange schon sehr genau positioniert sind und keine Abweichungen zur Lage des Schweißspaltes haben. Da dem nicht so ist, sind ungenau und schräg anliegende Platinen häufige Ursache für Störungen, die dann zeitaufwendig behoben werden müssen.

Es ist deshalb Aufgabe der Erfindung, eine Einrichtung der oben genannten Gattung dahingehend zu verbessern, daß damit Platinen unterschiedlicher Größen und Formen positionsgenau und lagegenau sowie schnell auf Schweißposition gebracht werden können. Dabei soll auch eine einfache und schnelle Verstellung der Positioniermittel und der Einschiebemittel auf wechselnde Platinengrößen und -formen erreicht werden.

Die Aufgabe wird erfindungsgemäß durch die Merkmale des Patentanspruches 1 gelöst. Die Patentansprüche 2 bis 7 beinhalten vorteilhafte Ausgestaltungen der Merkmale des Patentanspruches 1.

Für das lagegenaue Einschieben der Platinen an die Mittenanschläge oder die gespannte Platine sind jeweils pro Platine zwei Kurzhubzylinder maßgebend, die durch ihre Verstellbarkeit an den Einschiebebalken nahe der Platinenkanten anordenbar sind. Ihre Wirksamkeit erst unmittelbar vor dem Anliegen der einzuschiebenden Platine sichert ein lagegenaues Einschieben der Platine bereits vom Auflageplatz aus.

Die Lagegenauigkeit der Platinen in Längsrichtung des Schweißspaltes wird durch die auf und mit einem Schienenpaar verfahrbaren Positionierrollen erzielt. Die Verfahrbarkeit dient dabei sowohl der Lageeinstellung der Positionierrollen als auch der Erzeugung einer Anpreßbewegung durch die Positionierrollen der einen Schiene gegenüber den Positionierrollen der anderen Schiene. Durch den Hebeantrieb sind alle Positionierrollen unterhalb der Tischebene absenkbar, um einen einfachen und schnellen Weg für die Abführung der verschweißten Platinen zu schaffen.

In den Zeichnungen ist die Erfindung an einem Ausführungsbeispiel erläutert. Es zeigen
- Fig. 1: eine Seitenansicht der Einschiebe- und Positioniereinrichtung quer zum Schweißspalt,
- Fig. 2: eine Draufsicht zu Fig. 1,
- Fig. 3: eine perspektivische Ansicht der Positioniereinrichtung längs zum Schweißspalt und
- Fig. 4: eine Ansicht aus Richtung A in Fig. 3.

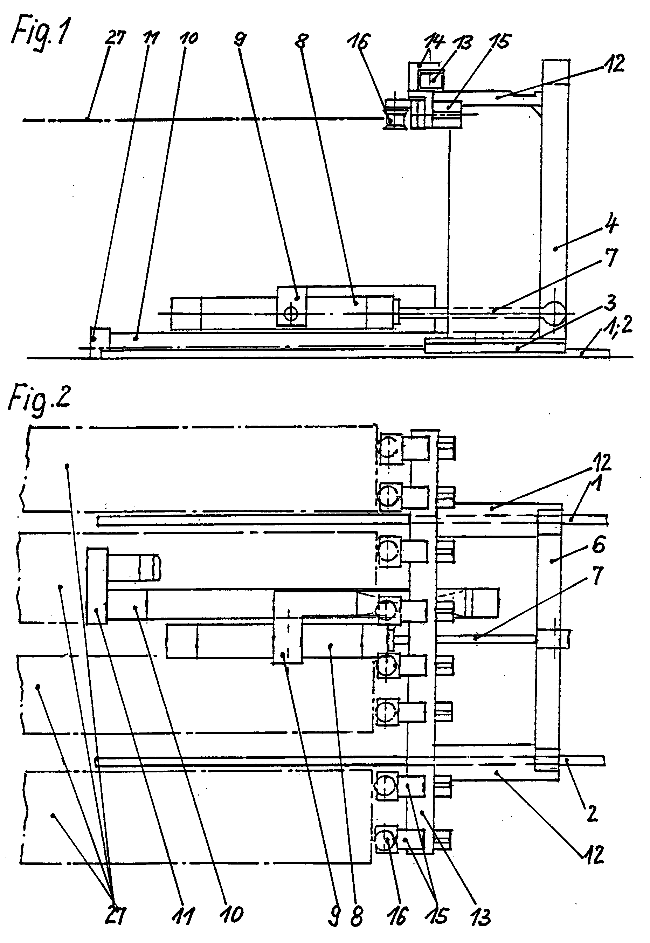

Zwischen den nicht gezeichneten stirnseitigen Gestellteilen einer Laserstrahlschweißmaschine sind rechtwinklig zur Schweißfuge zwei Führungsschienen 1;2 am Gestellboden befestigt (Fig. 1). Auf jeder dieser Führungsschienen 1;2 ist beidseitig des Schweißspaltes je ein Schlitten 3 verschiebbar gelagert. An jedem Schlitten 3 ist am äußeren Ende eine senkrechte Säule 4 angeschweißt, die über die Höhe des Schweißtisches 5 hinausragt. An dem Schlitten 3 und an ihren freien Enden sind beide Säulen 4 durch eine Traverse 6 verbunden. An der Mitte der unteren Traverse 6 ist eine Kolbenstange 7 eines Pneumatikzylinders 8 angelenkt. Der Pneumatikzylinder 8 ist mit einem Verstellglied 9 eines numerisch gesteuerten Verstellantriebes 10 verbunden, dessen Antriebsglied 11 am Gestellboden befestigt ist. An jeder Säule 4 ist etwas über Höhe des Schweißtisches 5 ein zur Schweißfuge zeigender Arm 12 fest angebracht, dessen Länge etwa der der Schlitten 3 entspricht. An den freien Enden der Arme 12 ist ein Einschiebebalken 13 verschweißt. Der Einschiebebalken 13 hat ein rechteckförmiges Hohlprofil und eine Länge, die etwas kleiner ist als die lichte Weite zwischen den stirnseitigen Gestellteilen. Auf dem Einschiebebalken 13 sind an U-förmigen Haken 14 eine Anzahl Kurzhubzylinder 15 leicht verschieb- und arretierbar gelagert. An jeder Kolbenstange der Kurzhubzylinder 15 ist eine um eine senkrechte Achse leicht drehbare Einschieberolle 16 gelagert. Ihre Mantelfläche ist mit einer V-förmigen Rille versehen. Diese Rille liegt auf der Höhe des Schweißtisches 5.

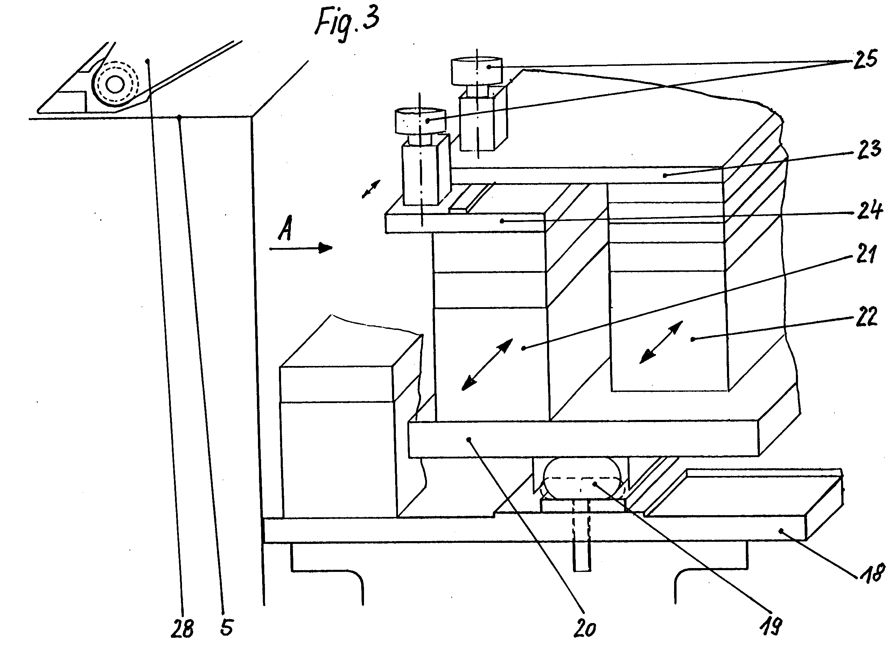

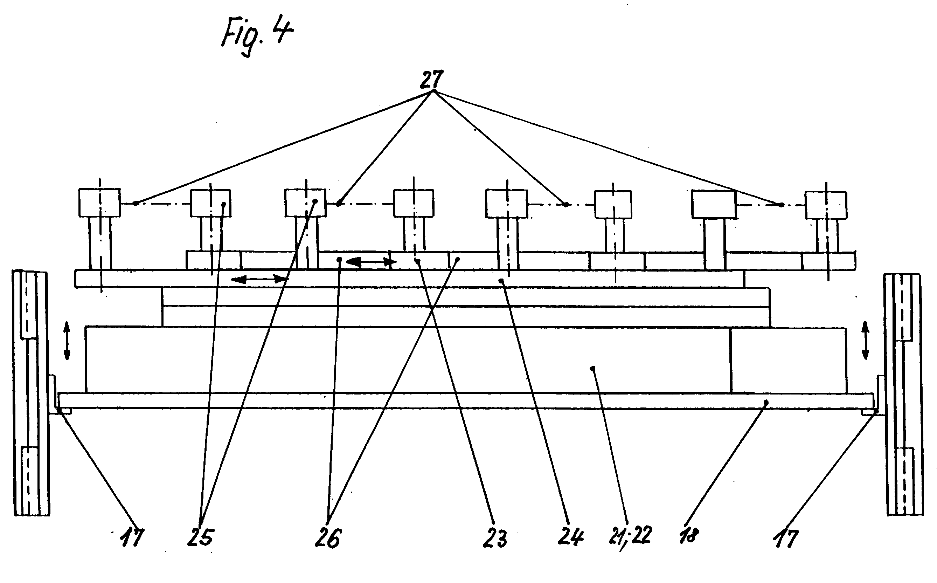

An den beiden stirnseitigen Gestellteilen sind beidseitig des Schweißspaltes Auflagewinkel 17 für parallel zum Schweißspalt angeordnete Traversen 18 befestigt (Fig. 4). Diese Traversen 18 sind unmittelbar neben den längsseitigen Flächen des Schweißtisches 5 gelagert (Fig. 3). Auf jeder der Traversen 18 ist unter Zwischenschaltung eines Druckschlauches 19 eine durch diese heb- und senkbare Platte 20 gelagert. Diese Platte 20 trägt zwei zueinander parallele Führungsbahnen 21;22. Auf jeder dieser Führungsbahnen 21;22 ist eine längs verfahrbare Schiene 23;24 gelagert, auf deren Oberseite nochmals längs verschiebbare Positionierrollen 25 gelagert sind. Beide Schienen 23;24 sind übereinanderliegend angeordnet. Die obere Schiene 23 ist an ihrer zum Schweißspalt zeigenden Kante kammartig ausgespart. Durch die Aussparungen 26 ragen die Positionierrollen 25 der unteren Schiene 24. Die Positionierrollen 25 beider Schienen 23;24 sind so in einer parallel zum Schweißspalt liegenden Ebene angeordnet. Als Verstell- und Betätigungsantriebe sind beide Schienen 23;24 mit je einem nicht gezeichneten numerisch gesteuerten Antrieb verbunden. Seide Antriebe sind auf der heb- und senkbaren Platte 20 angebracht. Die Höhenlage der Traverse 18 ist so gewählt, daß die Positionierrollen 25 im gehobenen Zustand auf Höhe des Schweißtisches 5 liegen und im gesenkten Zustand unterhalb der Höhe des Schweißtisches 5 gehalten werden.

Die Arbeitsweise der Einrichtung ist folgende:
Die zu verschweißenden Platinen 27 werden gestaltungsgerecht auf einem Zuführwagen positioniert. Dort werden sie mittels einer Saugerspinne, die durch einen Transportroboter bewegt wird, entnommen. Dann bewegt der Transportroboter die Saugerspinne an eine vorher bestimmte Position über der Laserstrahlschweißmaschine und senkt sie soweit ab, daß die Platinen 27 auf den Einschiebeflächen zu liegen kommen. Zu diesem Zeitpunkt befindet sich der Einschiebebalken 13 in seiner hintersten Stellung und die Positionierrollen 25 der obersten Schiene 23 etwa 10 mm außerhalb des Sollmaßes. Die Positionierrollen 25 auf der unteren Schiene 24 werden auf ihrem Sollmaß gehalten.
Nun erhält der Pneumatikzylinder 8 rechtsseitig Druckluft und bewegt dadurch den Einschiebebalken 13 um das Maß seines maximalen Hubes in Richtung Schweißspalt. Dabei kommen die Einschieberollen 16 der Kurzhubzylinder 15 mit den hinteren Kanten der Platinen 27 in Berührung und schieben diese in Richtung Schweißspalt. Die Kurzhubzylinder 15 sind vorher so eingestellt worden, daß ihre Einschieberollen 16 nahe der Seitenkanten jeder Platine 27 zum Angriff kommen. Nach Erreichen des maximalen Hubes des Pneumatikzylinders 8 führt der numerisch gesteuerte Verstellantrieb 10 den zusätzlichen Weg, der sich aus der Platinenlänge ergibt, aus und bringt dadurch die Platinen 27 bis auf etwa 15 mm an den Schweißspalt heran. Vor Erreichen dieser Lage befinden sich die vorderen Abschnitte der Platinen 27 bereits zwischen den Positionierrollen 25. Zu diesem Zeitpunkt erhält die obere Schiene 23 mit ihren Positionierrollen 25 eine Verschiebebewegung in Richtung auf die Positionierrollen 25 der unteren Schiene 24. Dadurch werden die Platinen 27 auf ihre Sollposition in Längsrichtung des Schweißspaltes gebracht. An der Endposition des Verstellantriebes 10 erhalten die Kurzhubzylinder 15 Druck und schieben dadurch die Platinen 27 an die Gegenplatine. Durch die Anordnung zweier Kurzhubzylinder 15 werden Schräglagen der Platinen 27 ausgeglichen und eine gleichmässige Anlage an die Kante der Gegenplatine geschaffen. Somit sind sowohl quer als auch längs zum Schweißspalt die Platinen 27 schnell und genau positioniert und werden mittels einer Spanneinrichtung 28 geklemmt. Es liegt im Rahmen der Erfindung, die Positionierrollen 25 der oberen Schiene 23 auf ihre Sollposition einzustellen und mittels der Positionierrollen 25 der unteren Schiene 24 die Verschiebebewegung auszuführen. Dieser Vorgang läuft in gleicher Weise ab, wenn eine Platine 27 gegen Mittenanschläge positioniert wird.
Sind beidseitig des Schweißspaltes die Platinen 27 geklemmt, so werden die Positionierrollen 25 in ihre untere Stellung abgesenkt und die Einschieberollen 16 in ihre hintere Ausgangsposition zurückgeführt. Nach Ausführung der Schweissung und Öffnen der Spanneinrichtungen 28 wird die verschweißte Platine 27 längs des Schweißspaltes aus der Laserstrahlschweißmaschine gezogen und gegebenenfalls einer weiteren Bearbeitung zugeführt.
Während des Schweißvorganges werden bereits neue Platinen 27 auf eine Zwischenposition vor oder neben der Laserstrahlschweißmaschine bewegt.

### Aufstellung der Bezugszeichen

- 1: Führungsschiene
- 2: Führungsschiene
- 3: Schlitten
- 4: Säule
- 5: Schweißtisch
- 6: Traverse
- 7: Kolbenstange
- 8: Pneumatikzylinder
- 9: Verstellglied
- 10: Verstellantrieb
- 11: Antriebsglied
- 12: Arm
- 13: Einschiebebalken
- 14: U-förmiger Haken
- 15: Kurzhubzylinder
- 16: Einschieberolle
- 17: Auflagewinkel
- 18: Traversen
- 19: Druckschlauch
- 20: Platte
- 21: Führungsbahn
- 22: Führungsbahn
- 23: Schiene
- 24: Schiene
- 25: Positionierrollen
- 26: Aussparungen
- 27: Platine
- 28: Spanneinrichtungen

## Patentansprüche

1. Einrichtung zum Einschieben und Positionieren von mindestens zwei Blechplatinen gleicher oder unterschiedlicher Stärken und Formen, gleicher oder unterschiedlicher Größen und gleicher oder unterschiedlicher Werkstoffe zueinander in einer Laserstrahlschweißmaschine mit beidseitig des Schweißspaltes angeordneten Spanneinrichtungen, einem Schweißtisch, gegen dessen Tischfläche die Blechplatinen gespannt werden, Mittenanschlägen und einer Schweißoptik, die parallel zum Schweißspalt verfahrbar ist,
gekennzeichnet durch folgende Merkmale:
- beidseitig des Schweißspaltes parallel zu diesem und parallel zur Tischfläche des Schweißtisches (5) angeordnete und verschiebbar gelagerte Einschiebebalken (13);
- mehrere in Längsrichtung des Einschiebebalkens (13) an diesem verschiebbar gelagerte Kurzhubzylinder (15), deren Kolbenstangen zum Schweißspalt zeigen und von denen zwei an einer Platine (27) anliegen;
- am bewegten Teil jedes Kurzhubzylinders (15) drehbar gelagerte Einschieberolle (16);
- zwischen der vorderen Stellung des Einschiebebalkens (13) und dem Schweißtisch (5) angeordnete, längs des Schweißspaltes verfahrbare Positionierrollen (25), die unter die Tischfläche absenkbar sind.

2. Einrichtung nach Anspruch 1,
dadurch gekennzeichnet,
daß die Lagerung der Kurzhubzylinder (15) am Einschiebebalken (13) als U-förmiger Haken (14) ausgebildet ist, auf dessen oberem Schenkel eine Arretiervorrichtung mit dem Einschiebebalken (13) angeordnet ist.

3. Einrichtung nach den Ansprüchen 1 und 2,
dadurch gekennzeichnet,
daß die Hantelfläche der Einschieberolle (16) mit einer V-förmigen Rille versehen ist.

4. Einrichtung nach Anspruch 1,
dadurch gekennzeichnet,
daß die Positionierrollen (25) für die gleichen seitlichen Kanten der verschiedenen Platinen (27) auf einer gemeinsamen Schiene (23;24) leicht wechselbar befestigt sind;
daß die Schienen (23;24) auf einer Platte (20) parallel zum Schweißspalt verschiebbar gelagert sind;
daß als Verschiebeantriebe numerisch gesteuerte Positionierantriebe angeordnet sind;
daß die Platte (20) im Gestell senkrecht heb- und senkbar gelagert ist.

5. Einrichtung nach den Ansprüchen 1 und 4,
dadurch gekennzeichnet,
daß die Schienen (23;24) für die rechtsseitigen und für die linksseitigen Positionierrollen (25) in einer Ebene parallel zueinander verschiebbar gelagert und seitlich kammartig ausgebildet sind, wobei die Vorsprünge der einen Schiene (24) unter den Aussparungen (26) der anderen Schiene (23) angeordnet sind und auf den Vorsprüngen die Positionierrollen (25) leicht wechselbar befestigt sind.

6. Einrichtung nach den Ansprüchen 1, 4 und 5,
dadurch gekennzeichnet,
daß die rechtsseitigen und die linksseitigen Positionierrollen (25) so auf ihren Schienen (23;24) angeordnet sind,
daß sie in einer Ebene liegen, die parallel zum Schweißspalt verläuft.

7. Einrichtung nach den Ansprüchen 1 und 4 bis 6,
dadurch gekennzeichnet,
daß als Hebeantrieb der Platte (20) zwischen dem Gestell und der Unterseite der Platte (20) in deren Längsrichtung verlaufend ein Druckschlauch (19) angeordnet ist.
